(19) **Europäisches Patentamt**
**European Patent Office**
**Office européen des brevets**

(11) **EP 4 597 916 A1**

(12) **EUROPEAN PATENT APPLICATION**

(43) Date of publication:
**06.08.2025 Bulletin 2025/32**

(21) Application number: **25155497.8**

(22) Date of filing: **03.02.2025**

(51) International Patent Classification (IPC):
**H04L 9/00** *(2022.01)*

(52) Cooperative Patent Classification (CPC):
**H04L 9/008**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **02.02.2024 KR 20240016923**
**11.07.2024 KR 20240091915**
**31.01.2025 KR 20250012226**

(71) Applicant: **CRYPTO LAB INC.**
**Gwanak-gu, Seoul 08826 (KR)**

(72) Inventor: **HANROT, Guillaume**
**08826 Seoul (KR)**

(74) Representative: **Dragotti & Associati S.R.L.**
**Via Nino Bixio, 7**
**20129 Milano (IT)**

(54) **ELECTRONIC DEVICE FOR PROCESSING DATA, AND METHODS THEREOF**

(57)     Disclosed is an electronic device. The device includes an interface; a memory; and at least one processor. The processor is configured to store data in the memory if the data is received from an external device through the interface, obtain a Softmax function computation result by performing powering and normalizing operations at least once repeatedly on a range from an initial approximation range to a target approximation range during a Softmax function computation process for the data, and transmit the obtained Softmax function computation result to the external device through the interface. Accordingly, the device may perform a Softmax function computation quickly and accurately.

## FIG. 3

```
Algorithm : SoftMax
```

Data: $x = \in [-M, 0]^n$ , $k \in Z \geq 0$
Result: $y = \text{SoftMax}(x)$.
$y_i^{(0)} \leftarrow \exp(x_i/2^k)$, $i = 1..n$;
for $j$ from 1 to $k$ do
$\quad \lambda_j \leftarrow \left( \sum_{i=1}^{n} y_i^{(j-1)^2} \right)^{-1/2}$;
$\quad z_i \leftarrow \lambda_j \cdot y_i^{(j-1)}$, $i=1..n$;    /* [Normalization] */
$\quad y_i^{(j)} \leftarrow z_i^2$, $i = 1..n$;    /* [Squaring] */
end
return $(y^{(k)})$

EP 4 597 916 A1

**Description**

[Technical Field]

The present disclosure relates to an electronic device for processing data and methods thereof.

[Background Art]

Various types of electronic devices are being developed with the advancement of electronic technology. These electronic devices may perform communication with various external devices including a server device and provide various services for a user.

In particular, recently, services such as analyzing user data or recognizing a user voice and responding thereto are being provided using deep learning models. A Softmax function or the like may be used to provide such services.

The Softmax function is a function that converts given input values into a probability distribution. The Softmax function may be used for various purposes. As an example, the Softmax function may be used in the last output layer of a neural network in the deep learning model. In detail, the Softmax function may be used to calculate a probability value for each class for input data.

The Softmax function uses an exponential function. Accordingly, if an input value range is large, an exponential function calculation may become numerically unstable and a computational burden may increase significantly.

In particular, if Softmax function computation is performed on a homomorphic ciphertext instead of general data, a result of exponential function computation may become extremely large or small, thus making its utilization difficult.

Accordingly, there is an emerging need for a faster and more efficient computation method.

[Disclosure]

[Technical Problem]

The present disclosure provides an electronic device for processing data that may perform Softmax function computation quickly and accurately, and methods thereof.

[Technical Solution]

According to at least one embodiment of the present disclosure, provided is electronic device including: an interface; a memory; and at least one processor, wherein the at least one processor is configured to based on the data is received from an external device through the interface, store data in the memory, obtain a Softmax function computation result by performing powering and normalizing operations at least once repeatedly on a range from an initial approximation range to a target approximation range during a Softmax function computation process for the data, and transmit the Softmax function computation result to the external device through the interface.

According to at least one embodiment embodiment of the present disclosure, provided is method of an electronic device for processing data, the method including: receiving and storing data from an external device; obtaining a Softmax function computation result by performing powering and normalizing operations at least once repeatedly on a range from an initial approximation range to a target approximation range during a Softmax function computation process for the data; and transmitting the Softmax function computation result to the external device.

According to the various embodiments of the present disclosure, the electronic device may perform the Softmax function computation or log-sum-exp (LSE) computation quickly and accurately.

[Description of Drawings]

FIG. 1 is a diagram for describing an operation of an electronic device according to at least one embodiment of the present disclosure;
FIG. 2 is a block diagram showing a configuration of the electronic device according to at least one embodiment of the present disclosure;
FIG. 3 is a diagram showing an example of an algorithm for performing Softmax function computation by the electronic device according to at least one embodiment of the present disclosure;
FIG. 4 is a diagram for describing a method for packing and processing a normalization factor by the electronic device according to at least one embodiment of the present disclosure;

FIG. 5 is a diagram showing an example of an algorithm for packing the normalization factor;

FIG. 6 is a diagram showing another example of an algorithm for performing the Softmax function computation by the electronic device according to at least one embodiment of the present disclosure;

FIG. 7 is a diagram showing yet another example of an algorithm for performing the Softmax function computation by the electronic device according to at least one embodiment of the present disclosure;

FIG. 8 is a flowchart for describing a method of an electronic device for processing data according to at least one embodiment of the present disclosure; and

FIGS. 9 and 10 are graphs for describing effects of the method for processing data according to the present disclosure.

[Best Mode]

Encryption/decryption may be applied as necessary to a process of transmitting information (or data) that is performed in the present disclosure, and an expression describing the process of transmitting the information (or data) in the present disclosure and the claims should be interpreted as including all cases of the encryption/decryption even if not separately mentioned.

In the present disclosure, an expression such as "transmission (transfer) from A to B" or "reception from A to B" may include transmission (transfer) or reception while including another medium in the middle, and may not necessarily express only the direct transmission (transfer) or reception from A to B.

In describing the present disclosure, a sequence of each step should be understood as non-restrictive unless a preceding step in the sequence of each step needs to logically and temporally precede a subsequent step. That is, except for the above exceptional case, the essence of the present disclosure is not affected even if a process described as the subsequent step is performed before a process described as the preceding step, and the scope of the present disclosure should also be defined regardless of the sequences of the steps. In addition, in this specification, "A or B" may be defined to indicate not only selectively indicating either A or B, but also including both A and B.

In addition, a term "including" in the present disclosure may encompass a concept of further including other components in addition to components listed as being included.

The present disclosure only describes essential components necessary for describing the present disclosure, and does not mention components unrelated to the essence of the present disclosure. In addition, it should not be interpreted as an exclusive concept that the present disclosure includes only the mentioned components, and should be interpreted as a non-exclusive concept that the present disclosure may include other components as well.

In addition, in the present disclosure, a "value" may be defined as a concept that includes a vector and a polynomial form as well as a scalar value.

Mathematical computations and calculations in each step of the present disclosure described below may be implemented as computer computations by a known coding method and/or coding designed to be suitable for the present disclosure to perform the corresponding computations or calculations.

Specific formulas described below are illustratively provided among possible alternatives, and the scope of the present disclosure should not be construed as being limited to the formulas mentioned in the present disclosure.

For convenience of description, the present disclosure defines the following notations:

$a \leftarrow D$: Select an element a based on distribution D.

$s1, s2 \in R$: Each of S1 and S2 is an element belonging to a set R.

mod(q): Perform modular computation using an element q.

$\lfloor \cdot \rceil$ : Round an internal value.

Hereinafter, various embodiments of the present disclosure are described in detail with reference to the accompanying drawings.

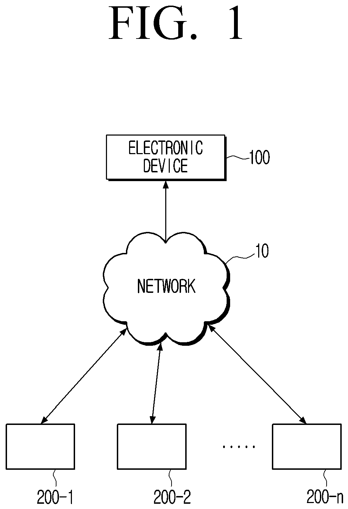

FIG. 1 is a diagram for describing an operation of an electronic device according to at least one embodiment of the present disclosure. Referring to FIG. 1, an electronic device 100 may communicate with multiple external devices 200-1 to 200-n via a network 10.

The network 10 may be implemented as any of various types of wired/wireless communication, broadcast communication, optical communication, cloud communication, or the like. FIG. 1 shows a state in which each of the external devices 200-1 to 200-n is connected to the electronic device 100 via the network 10, is not limited thereto, and each of the external devices may be connected to the electronic device 100 without a separate medium, such as wireless fidelity (Wi-Fi), Bluetooth, or near field communication (NFC).

The electronic device 100 shown in FIG. 1 is a device for receiving and processing data from each of the external devices 200-1 to 200-n. The electronic device 100 may be implemented as a server device or a cloud server. The electronic device 100 may also be implemented as a web server accessible via the network 10, such as the Internet.

The external device 200-1 to 200-n may be various electronic devices used by various users. In detail, each of the external device 200-1 to 200-n may be implemented in any of various types such as a personal computer (PC), a laptop PC, a mobile phone, a tablet PC, a kiosk, a television (TV), a home server, another electronic device equipped with an IoT function, or a game player. Referring to FIG. 1, the device is described as the external device to distinguish the corresponding device from the electronic device 100. However, the external devices 200-1 to 200-n may alternatively be described as user terminal devices.

The user may access the electronic device 100 using the external device (e.g., 200-1) owned by the user, and then transmit any data to the electronic device 100.

The electronic device 100 may store an artificial intelligence (AI) model. Accordingly, the data transmitted from the external device 200-1 may be input into the artificial intelligence model, and an output value of the artificial intelligence model may then be transmitted to the electronic device 100. As an example, if the electronic device 100 stores a deep learning model, the electronic device 100 may generate and provide a probability values for each class for the data transmitted from the external device 200-1.

A Softmax function may be used in a process in which the electronic device 100 processes the data. The Softmax function is a function that converts an input value into an exponential function and divides the same by its sum. An output value of the Softmax function has a value between 0 and 1, and the sum of all output values becomes 1.

The Softmax function may be expressed as follows.

[Formula 1]

$$\text{Softmax}(\{x_i\}_{1 \le i \le n})_j = \frac{e^{x_j}}{\sum_{i=1}^{n} e^{x_i}}$$

In Formula 1, x indicates input data, and i and j indicate variables.

The electronic device 100 according to at least one embodiment of the present disclosure may obtain a Softmax function computation result by performing powering and normalizing operations at least once repeatedly on a range from an initial approximation range to a target approximation range during a Softmax function computation process for the data. This operation is again described in detail in the following description.

The electronic device 100 may transmit the Softmax function computation result or a data analysis result including the computation result to the external device 200-1. The external device 200-1 may provide the received result to the user.

As an example, if the external device 200-1 transmits an image including a specific object to the electronic device 100, the electronic device 100 may transmit a probability value itself indicating which class the object belongs to (e.g., 50% probability of cat, 30% probability of dog, and 20% probability of another animal), or transmit an estimation result for the object (object≒cat) based on the probability value.

Meanwhile, the external device 200-1 may transmit the data to the electronic device 100 in an unencrypted state, or transmit the data in an encrypted state. That is, the importance of technology to prevent the data transmitted to another device from being exposed to a third party is also increasing as personal privacy becomes more important. The data may be leaked not only during a transmission process but also during a process of receiving and processing the data.

That is, if photo data is encrypted by the external device 200-1 using a general encryption technique as described above and provided to the electronic device 100, the electronic device 100 may perform decryption first because the electronic device 100 is unable to perform computation on data in the encrypted state. Accordingly, user data may be exposed to an administrator of the electronic device 100. To prevent even such risks, homomorphic encryption technology is in use recently.

The homomorphic encryption technology is a technology that may process the encrypted data by computing the same in its encrypted state, and thus provide various services while maintaining security by using the homomorphic encryption technology.

A ciphertext encrypted using the homomorphic encryption technology is referred to as a homomorphic ciphertext. The homomorphic ciphertext has a property where computation may be performed on data in its encrypted state, and the same result value may be obtained as in a case where the computation is performed on the data in a plaintext state, if the computation result is decrypted.

The external device 200-1 may generate a public key and a secret key, and then use the public key to homomorphically encrypt the data to generate the homomorphic ciphertext.

A processor (not shown) of the external device 200-1 may generate the public key using a Ring-Learning With Errors (LWE) technique. In detail, the processor of the external device 200-1 may first set various parameters and rings and store the same in a memory (not shown). The parameters here are not parameters used for training the artificial intelligence model, but parameters used in the homomorphic encryption technology. An example of the parameter may include a length of plaintext message bits, a size of the public key or the secret key, or the like.

The ring may be expressed by the following formula.

[Formula 2]

$$R = Z_q[X]/f(x)$$

Here, R indicates the ring, $Z_q$ indicates a coefficient, and f(x) indicates an N-th polynomial.

The Ring indicates a set of polynomials having predetermined coefficients, and indicates the set in which addition and multiplication are defined between elements and which is closed under the addition and multiplication.

As an example, the ring R indicates a set of the N-th polynomials having the coefficient $Z_q$. In detail, if n is Φ(N), N indicates a polynomial which may be calculated as the remainder of dividing the polynomial by an N-th cyclotomic polynomial.

In Formula 2, (f(x)) indicates ideal of $Z_q[x]$ generated by f(x). The Euler totient function Φ(N) indicates the number of natural numbers that are coprime to N and smaller than N. If ΦN(x) is defined by the N-th cyclotomic polynomial, the ring may also be expressed by Formula 3 below.

[Formula 3]

$$R = Z_q[X]/\Phi_N(x)$$

Meanwhile, the ring R of Formula 3 above may have binary data in a plaintext space. If such a ring is set up, the external device 200-1 may calculate a secret key sk from the ring. The secret key sk may be expressed as follows.

[Formula 4]

sk ← (1, s(x)), s(x) ∈ R

Here, s(x) indicates a random polynomial generated using a small coefficient.

In addition, the external device 200-1 may calculate a first random polynomial a(x) from the ring. The first random polynomial may be expressed as follows.

[Formula 5]

a(x) ← R

In addition, the external device 200-1 may calculate an error. In detail, the external device 200-1 may extract the error from a discrete Gaussian distribution or a distribution having a statistical distance close thereto. This error may be expressed as follows.

[Formula 6]

$$e(x) \leftarrow D^n_{\alpha q}$$

If even the error is calculated, the external device 200-1 may calculate a second random polynomial by performing a modular computation on the error in the first random polynomial and the secret key. The second random polynomial may be expressed as follows.

[Formula 7]

$$b(x) = -a(x)s(x) + e(x)(mod\ q)$$

Finally, a public key pk may be set up to include the first random polynomial and the second random polynomial as follows.

[Formula 8]

$$pk = (b(x),\ a(x))$$

The above-described key generation method is only an example, and is not necessarily limited thereto, and the external device 200-1 may generate various keys using other methods.

The external device 200-1 may store information on the keys generated for the homomorphic encryption in the memory.

The external device 200-1 may generate the homomorphic ciphertext using the public key described above. The homomorphic ciphertext generated by the external device 200-1 may be generated in a form that satisfies the following properties if decrypted using the secret key thereafter.

[Formula 9]

$$Dec(ct,\ sk) = \langle ct,\ sk \rangle = M+e(mod\ q)$$

Here, $\langle$ and $\rangle$ indicate dot product computation (or usual inner product), ct indicates the ciphertext, sk indicates the secret key, e indicates an encryption error value, and mod q indicates a modulus of the ciphertext. M indicates a plaintext message, which may be a reply in the various embodiments of the present disclosure.

q needs to be selected to be larger than a result value M multiplied by a scaling factor $\Delta$ to the message. If an absolute value of the error value e is sufficiently smaller than M, a decryption value M+e may be a value that may replace the original message by the same precision in significant figure computation. Among decrypted data, the error may be disposed on the least significant bit (LSB) side, and M may be disposed on the next least significant bit side.

If a size of the message is excessively small or large, the external device 200-1 may adjust its size using the scaling factor. If the scaling factor is used, not only a message in an integer form but also a message in a real number form may be encrypted, thus greatly increasing its usability. In addition, the size of the message may be adjusted using the scaling factor to thus also adjust a size of an effective region, that is, a region where the messages exist in the ciphertext after the computation is performed.

In some embodiments, the modulus q of the ciphertext may be set and used in various forms. As an example, the modulus of the ciphertext may be set in a form of an exponential power $q=\Delta^L$ of the scaling factor $\Delta$. If $\Delta$ is 2, the modulus may be set to a value such as $q=2^{10}$. The homomorphic ciphertext according to the present disclosure is described assuming that fixed point-numbers are used. However, the homomorphic ciphertext may also be applied even in case of using floating-point numbers.

The method for generating the homomorphic ciphertext is described above in detail. However, the present disclosure is not necessarily limited thereto, and the homomorphic ciphertext may be generated in various other ways.

If the homomorphic ciphertext generated by the external device 200-1 is transmitted to the electronic device 100, the electronic device 100 may perform the computation on the homomorphic ciphertext and then transmit the computation result to the external device 200-1. As described above, in case of performing the Softmax function computation, the electronic device 100 may obtain the Softmax function computation result by performing the powering and normalizing operations at least once repeatedly on the range from the initial approximation range to the target approximation range, and transmit the obtained Softmax function computation result to the external device 200-1. The transmitted Softmax function computation result is a computation result of the homomorphic ciphertext and may thus also be formed in the form of the homomorphic ciphertext. As an example, the powering and normalizing operations may be squaring and normalizing operations.

The external device 200-1 may decrypt the received Softmax function computation result using the secret key and provide the same to the user.

As described above, the electronic device 100 may perform the Softmax function computation on the homomorphic ciphertext if not only the general data but also the homomorphic ciphertext are received. In particular, it is difficult to perform any computation other than addition or multiplication on the homomorphic ciphertext due to the property of the homomorphic ciphertext. Therefore, if exponential function computation included in the Softmax function is applied to the homomorphic ciphertext as it is, a computational burden may be very large and the computation result may be inaccurate. However, according to the various embodiments of the present disclosure, the Softmax function computation may be performed quickly and accurately on the homomorphic ciphertext.

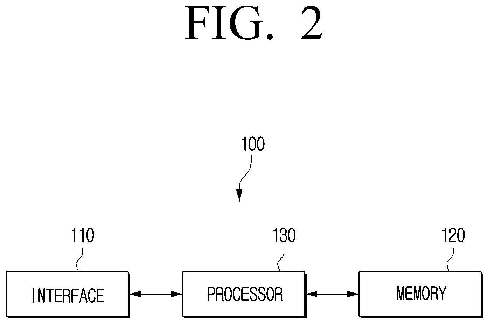

FIG. 2 is a block diagram showing a configuration of the electronic device according to at least one embodiment of the present disclosure. Referring to FIG. 2, the electronic device 100 may include an interface 110, a memory 120, and a processor 130. FIG. 2 shows one interface 110, one memory 120, and one processor 130. However, each component is not limited to this number, and multiple components may be implemented.

The interface 110 is a component for performing the communication with the external device 200-1 to 200-n, or the like. The interface 110 may transmit and receive various signals and the data with the external device by using various wired and wireless communication methods such as wired/wireless local area network (LAN), wide area network (WAN), Ethernet, Institute of Electrical and Electronics Engineers 1394 (IEEE 1394), Bluetooth, access point (AP)-based wireless fidelity (Wi-Fi), Zigbee, high-definition multimedia interface (HDMI), universal serial bus (USB), mobile high-definition link (MHL), audio engineering society/European broadcasting union (AES/EBU), optical communication, or coaxial cable. The interface 110 may alternatively be referred to as a communication unit or a communication module.

The memory 120 is a component for storing various programs, data, instructions, or the like required for an operation of the electronic device 100. The memory 120 may be implemented as at least one of various memories, such as random access memory (RAM; e.g., dynamic RAM (DRAM)), static RAM (SRAM), synchronous dynamic RAM (SDRAM), one time programmable ROM (OTPROM), programmable ROM (PROM), erasable and programmable ROM (EPROM), electrically erasable and programmable ROM (EEPROM), mask ROM, flash ROM, flash memory, a hard drive, or a solid state drive (SSD).

The processor 130 is a component for controlling overall operations of the electronic device 100. The processor 130 may perform various operations based on instructions, programs, and data stored in the memory 120.

The processor 130 may be implemented as a digital signal processor (DSP) or a microprocessor that processes digital signals. However, the processor 130 is not limited thereto, may include at least one of a central processing unit (CPU), a micro controller unit (MCU), a micro processing unit (MPU), a controller, an application processor (AP), a communication processor (CP), or an advanced RISC machine (ARM) processor, or may be defined by such a term. In addition, the processor 130 may be implemented in a system-on-chip (SoC) or a large scale integration (LSI), in which a processing algorithm is embedded, or may be implemented in the form of a field programmable gate array (FPGA). The processor 130 may perform various functions by executing computer-executable instructions stored in the memory 120.

For example, if data and instructions related to the Softmax function are stored in the memory 120, the processor 130 may perform the Softmax function computation based on the data and instructions.

Alternatively, if the artificial intelligence model that performs various computations, including the Softmax function computation, is stored in the memory 120, the Softmax function computation may be performed during a process of processing the data using the artificial intelligence model. The various embodiments of the present disclosure may be applied not only to performing the Softmax function computation by individual instructions, but also to performing the Softmax function computation during an execution process of the artificial intelligence model.

The processor 130 may store the data in the memory 120 if the data is received from the external device 200-1 to 200-n through the interface 110. The received data may be general plaintext data or the homomorphic ciphertext described above.

The processor 130 may obtain the Softmax function computation result by performing the powering and normalizing operations at least once repeatedly on the range from the initial approximation range to the target approximation range during the Softmax function computation process, and transmit the Softmax function computation result to the external device through the interface 110.

In the present disclosure, the powering and normalizing operations may be a series of computation processes that compute a power of the computation result for the data and then normalize the same.

The powering and normalizing operations may be expressed using the following formula.

[Formula 10]

$$\text{Softmax}(\{tx_j\}_{1 \leqslant j \leqslant n})_i = \frac{y_i^t}{\sum_{j=1}^{n} y_j^t}$$

Here,

$y_i = u \cdot \text{Softmax}(\{x_j\}_{1 \leqslant j \leqslant n})_i$ for all $i$, $1 \leq i \leq n$

or,

$y_i = u \cdot \exp(\{x_j\}_{1 \le j \le n})_i$ for all i, $1 \le i \le n$ in an initial step.

In Formula 10, x indicates the homomorphic ciphertext, i indicates an integer, n indicates an arbitrary positive integer, t indicates an integer greater than or equal to 2, and u indicates a nonzero real number. This formula may be used to extend a Softmax approximation from an initial approximation range [a, b] to a target approximation range [ta, tb]. In detail, the target approximation range may be reached by using the above formula repeatedly k times for an integer k greater than or equal to 1.

As described above, the squaring and normalizing operations may be performed as an example of the powering and normalizing operations. If the Softmax function is expressed by Formula 1 above, the squaring and normalizing operations may be expressed using the following formula.

[Formula 11]

$$\text{Softmax}\left(\left\{2x_j\right\}_{1 \le j \le n}\right)_i = \frac{(e^{x_i})^2}{\sum_{j=1}^{n}(e^{x_j})^2}$$

or, for all i if y=Softmax(x) or y=(exp $(x_i))_{1 \le i \le n}$,

$$\text{Softmax}(2\mathbf{x})_i = \frac{y_i^2}{\sum_{j=1}^{n} y_j^2}$$

In Formula 11, x indicates the homomorphic ciphertext, i and j indicate the integers, and n indicates the positive integer. In Formula 11, a constant u may be determined to enable $y_j$ to become u*Softmax(x)$_j$ for all j. For the powering and normalizing operations described above, 2 in Formula 11 may be replaced with the arbitrary integer t≥2. Meanwhile, if an intermediate computation result y obtained while performing the squaring and normalizing operations multiple times is defined as, for example, y=SoftMax $(x/2^{k-1})_i$, or y= (exp $(x_i/2^k))_{1 \le i \le n}$, the Softmax function may be expressed as follows.

[Formula 12]

$$\text{SoftMax}(\mathbf{x}/2^{k-1})_i = \frac{y_i^2}{\sum_{i=1}^{n} y_i^2}$$

In Formula 12, i, j, k indicate variables, and y indicates the intermediate computation result.

If the variable k is set appropriately in Formula 12, then (exp$(x_i/2^k))_{1 \le i \le n}$, is calculated, and its resulting value is squared k times (doubled or squared), SoftMax(x) as in Formula 1 may be derived.

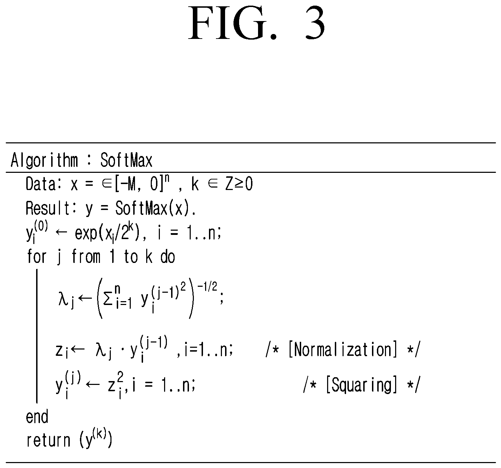

FIG. 3 is a diagram showing an example of an algorithm for performing the Softmax function computation by the electronic device according to at least one embodiment of the present disclosure.

The processor 130 may obtain the Softmax function computation result by performing the squaring and normalizing operations at least once according to the algorithm shown in FIG. 3.

If M is a positive real number, x∈[-M,0]$^n$, and k is an integer satisfying k≒log M-log log n, it may be much faster and more efficient to perform k exponential function computations on an approximation range [-logn, 0] and k inverse computations (or inverse square-roots computations) on [1/n, 1] than to perform difficult exponential function computations on an approximation range [-M, 0] and difficult inversion computations on $[1/n^{2^k}, 1]$ . If k is sufficiently large, the inversion that needs to be calculated first may belong to a range [nexp(-M/2$^k$), n], and a calculation range may thus be clearly limited, making inversion computation possible.

After the first squaring and normalizing operations, if y=SoftMax(x/2$^k$), $\sum_{i=1}^{n} y_i$ becomes 1. Therefore, a calculable range of $\sum_{i=1}^{n} y_i^2 \in [1/n, 1]$ may be obtained again by the Cauchy-Schwarz inequality.

If the powering and normalizing operations are performed based on the algorithm in FIG. 3, y in Fig. 3 may also be defined using the following formula.

[Formula 13]

$$y^j \leftarrow \left(\lambda_j \times \left(y_i^{(j-1)}\right)^{t/k} / u\right)^k$$

Alternatively, the powering and normalizing operations may be computed using the following formula.

[Formula 14]

$$y_i^{(j)} \leftarrow \left(\lambda \cdot \left(y_i^{(j-1)^k} / u\right)\right)^{t/k}$$

Here, $\lambda$ indicates a normalization factor. The normalization factor $\lambda$ may be expressed using the following formula.

[Formula 15]

$$\lambda \leftarrow u \cdot \left(\sum_{i=1}^{n} y_i^{(j-1)^t}\right)^{-k/t}$$

In Formulas 14 and 15, t indicates the integer parameter greater than or equal to 2, k indicates an integer parameter greater than or equal to 1, u indicates the nonzero real number, $\lambda$ indicates the normalization factor, j indicates the integer, $y^{(j-1)}$ indicates a j-1th intermediate Softmax computation result, i indicates the integer, and $y^{(j)}$, which is a result of the above formula, indicates a jth intermediate Softmax computation result.

Meanwhile, referring to Formulas 12 and 13 described above, it may be seen that the normalization is performed by multiplying the squared computation result $y_i^2$ by the normalization factor. Therefore, the normalization factor $\lambda$ may also be expressed using the following formula.

[Formula 16]

$$\lambda = 1 / \left(\sum_{i=1}^{n} y_i^2\right)^{1/2}$$

As the squaring and normalizing operations are performed repeatedly, a normalization factor value may also be changed. Accordingly, the normalization factor $\lambda$ may be generalized using the following formula.

[Formula 17]

$$\lambda_j \leftarrow \left(\sum_{i=1}^{n} y_i^{(j-1)^2}\right)^{-1/2}$$

As shown in FIG 3, a resulting value $y^{(k)}$ obtained by performing the squaring and normalizing operations k times becomes the Softmax function computation result.

If generalized using powering and normalizing operations instead of the squaring and normalizing operations, the normalization factor may be defined using the following formula.

[Formula 18]

$$\lambda_j \leftarrow u \times \left( \sum_i \left( y_i^{(j-1)} \right)^t \right)^{-1/k}$$

Here, u indicates a constant. As described above, the powering and normalization computations and the normalization factor may be modified in various ways depending on an embodiment. The processor 130 may also apply the above formulas using u=1, t=2, and k=2. In this case, the processor 130 may obtain the normalization factor used in the squaring and normalizing operations (i.e., the algorithm in FIG. 3), and obtain the Softmax function computation result using the squaring and normalizing operations.

According to the various embodiments of the present disclosure, in case of performing the Softmax function computation, the processor 130 may perform the squaring and normalizing operations at least once on the range from the initial approximation range to the target approximation range without performing the computation directly on the target approximation range, and finally obtain the Softmax function computation result for the target approximation range.

In the present disclosure, the initial approximation range is an initial range set to a size that facilitates the exponential function computation and the inversion computation, and the target approximation range may be a final range set to a size equal to or greater than that of the target approximation range. If the powering and normalizing operations are implemented as the squaring and normalizing operations, the initial approximation range and the target approximation range may each be set to a multiple of 2. For example, if the target approximation range is [-128, 0], the initial approximation range may be set to [-4, 0] or [-8, 0]. If the initial approximation range is set to [-4, 0], the processor 130 may obtain the Softmax function computation result for the target approximation range [-128, 0] by repeatedly performing the squaring and normalizing operations a total of five times, as follows: [-4, 0] -> [-8, 0] -> [-16, 0] -> [-32, 0] -> [-64, 0] -> [-128, 0]. As in the above example, the squaring and normalizing operations are described as being performed up to [-128, 0]. However, the present disclosure is not limited thereto, and the powering and normalizing operations may also be performed multiple times up to the approximation range [-M, 0] according to the various embodiments of the present disclosure.

Meanwhile, in performing the squaring and normalizing operations, the processor 130 may perform the normalizing operation after the squaring operation, and a computation order is not necessarily limited thereto. That is, in performing the squaring and normalizing operations, the processor 130 may perform the normalization computation first and then the squaring computation. In detail, the processor 130 may also calculate $z_i = \dfrac{y_i}{\sqrt{\sum_{i=1}^{n} y_i^2}}$ first and then square the same. If the processor 130 performs the normalization computation first and then the squaring computation, the numerical precision may be increased compared to a case of performing the squaring computation and then the normalization computation. However, the processor 130 needs to calculate $y_i^2$ first and then calculate $z_i^2$, thus making calculation efficiency lower than a method for performing the squaring and normalizing operations.

Therefore, the order of the square computation and the normalization computation may be selectively applied considering a system design purpose. For convenience of description, the present disclosure describes the squaring and normalizing operations (or square-and-normalize) and does not necessarily indicate that the squaring computation is performed first and the normalization computation is then performed. The description may be interpreted as including all cases where the normalization computation is performed first and the squaring computation is then performed. The same applies to the powering and normalizing operations.

Meanwhile, the electronic device 100 may receive multiple different data or homomorphic ciphertexts. In this case, the electronic device 100 may obtain the above-described Softmax function computation result using the algorithm in FIG. 3 for each of the data or the homomorphic ciphertext. However, according to another embodiment of the present disclosure, the normalization factor may be packed and processed.

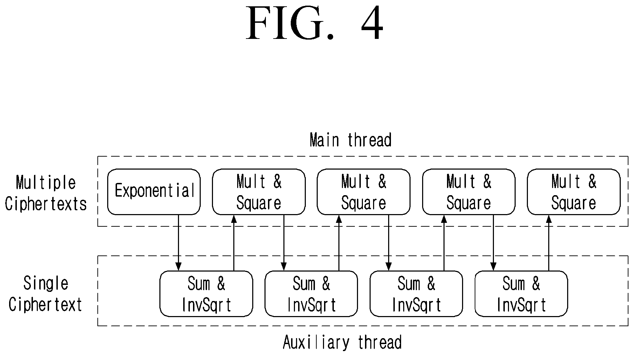

FIG. 4 is a diagram for describing a method for packing and processing the normalization factor by the electronic device according to at least one embodiment of the present disclosure.

As expressed in the formulas described above, the Softmax function may include a numerator and a denominator. The exponential function computation and the squaring computation may be performed in a process of computing the numerator, and computation to find the reciprocal of a summation value may be performed in a process of computing the denominator. The denominator may correspond to the normalization factor. Referring to FIG. 4, a process of computing the normalization factors is referred to as an auxiliary thread, and the remaining computation process is referred to as a main thread.

The processor 130 may classify a storage space of the memory 120 into a storage space corresponding to the main thread and a storage space corresponding to the auxiliary thread, or may use different memories for the main thread and the auxiliary thread, separately. Alternatively, a processor performing the main thread and a processor performing the auxiliary thread may be used separately. For example, at least one main processor may perform each computation included in the main thread, and at least one sub processor may perform each computation included in the auxiliary thread. In the auxiliary thread, a single ciphertext including the normalization factor for normalization of each of multiple homomorphic ciphertexts may be obtained. The single ciphertext obtained during the auxiliary thread may alternatively be referred to as an integrated normalization factor.

The main processor may perform the squaring and normalizing operations based on the ciphertext obtained during the auxiliary thread and the computation result from the main thread. As an example, the main processor may multiply the ciphertext obtained during the auxiliary thread and the computation result from the main thread. The main processor may repeatedly perform the squaring and normalizing operations until the target approximation range is reached.

Referring to FIG. 4, it may be seen that the main thread for the multiple homomorphic ciphertexts includes the exponential function computation and the squaring computation, and the auxiliary thread includes summation and inversion computation. If the multiple homomorphic ciphertexts are received and stored in the memory 120 and a dimension of an input value vector is n, the processor 130 needs to process a total of n numbers while processing the main thread, and process one real number while processing the auxiliary thread.

Therefore, if the main thread and the auxiliary thread are processed separately as in FIG. 4, the squaring and normalizing operations on the multiple homomorphic ciphertexts may be performed more efficiently.

In detail, in performing the squaring and normalizing operations on multiple Softmax input values, the processor 130 may obtain the single ciphertext including the multiple normalization factors by aggregating the respective normalization factors for the homomorphic ciphertext into one. As described above, this ciphertext may also be referred to as the integrated normalization factor. The operation of aggregating the multiple normalization factors may be referred to as the packing in the present disclosure.

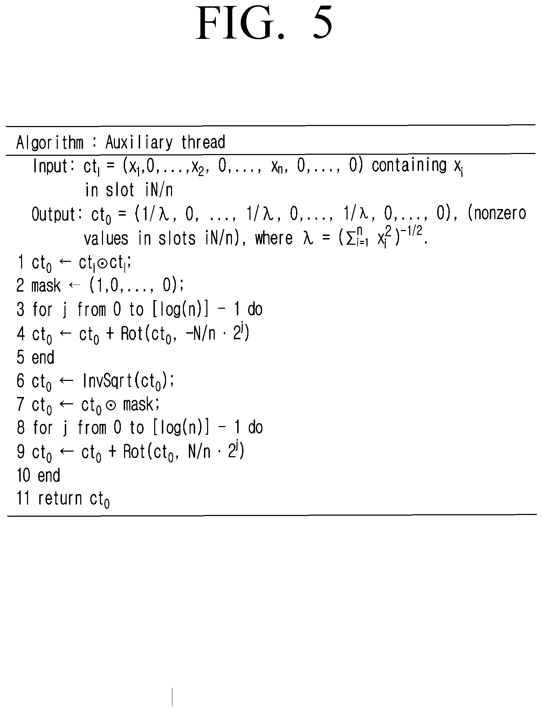

FIG. 5 is a diagram showing an example of an algorithm for packing the normalization factor by the electronic device according to at least one embodiment of the present disclosure. In detail, FIG. 5 shows a specific algorithm for performing the auxiliary thread in FIG. 4.

As shown in FIG. 5, it may be assumed that $N_0$ is the number of slots of the homomorphic ciphertext and n is an integer dividing $N_0$. If the homomorphic ciphertext including x1 to xn in slots 1, 1+N/n, ..., and 1+(n-1)N/n and 0 in the remaining slots is input, the processor 130 may compute the homomorphic ciphertext including $\sum x_i^2$ in the slots 1, 1+N/n, ..., and 1+(n-1)N/n by using one multiplication and $\lceil \log n \rceil$ rotations. If the normalization factor is $\lambda = 1/\sqrt{\sum_{i=1}^{n} x_i^2}$, the processor 130 may calculate the ciphertext including xi/$\lambda$ in the slot 1+iN/n by using one inverse square root function, two Hadamard products, and $2\lceil \log n \rceil$ rotations.

In detail, referring to FIG. 5, if the ciphertext ctI=(x1, 0, ..., xn, 0, ..., 0) including xi in the slot iN/n is input, the processor 130 may obtain the output value ctO of the auxiliary thread as (1/$\lambda$, 0, 1/$\lambda$, 0, ..., 1/$\lambda$, 0, ..., 0).

The processor 130 may aggregate the normalization factors obtained for the multiple homomorphic ciphertexts into a single homomorphic ciphertext. As an example, the processor 130 may pack the multiple homomorphic ciphertexts into a smaller number of homomorphic ciphertexts by taking advantage of the single instruction, multiple data (SIMD) property of a fully homomorphic encryption (FHE) system.

The processor 130 may perform the powering and normalizing operations on the multiple homomorphic ciphertexts based on the computation result and the ciphertext obtained during the auxiliary thread if an exponential function computation value is obtained during the main thread for each homomorphic ciphertext. The computation result obtained during the main thread may be referred to as the intermediate computation result. In this case, the computation order may vary depending on the characteristics of the normalization factor. For example, the processor 130 may first multiply the normalization factor before performing the powering computation (e.g., squaring computation). On the other hand, if the normalization factor is defined as shown in Formula 14, the processor 130 may first perform the powering computation or the squaring computation and then multiply the result by the normalization factor. In addition, the processor 130 may multiply the normalization factor by a constant and also multiply $x_j$ by the constant.

The processor 130 may sequentially perform masking to apply the single ciphertext including the multiple normalization factors multiple times.

Referring to FIG. 4, the processor 130 may first perform the exponential function computation during the main thread for each of the multiple homomorphic ciphertexts, then perform the summation and inversion computation (Sum & InvSqrt) during the auxiliary thread, and then multiply their values. If the processor 130 performs these steps multiple times, the processor 130 may obtain the Softmax function computation result for the multiple homomorphic ciphertexts.

Hereinabove, the description describes an example of the algorithm that performs the squaring and normalizing operations multiple times in performing the Softmax function computation. However, this algorithm may be modified in various ways.

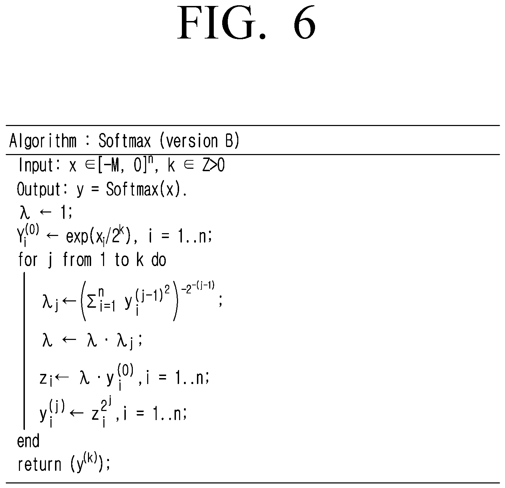

FIG. 6 is a diagram showing another example of an algorithm for performing the Softmax function computation by the electronic device according to at least one embodiment of the present disclosure. The processor 130 may obtain the Softmax function computation result by executing the algorithm as shown in FIG. 6.

Referring to FIG. 6, unlike the formulas described above, the normalization factor may be set as follows.

[Formula 19]

$$\lambda_j \leftarrow \left( \sum_{i=1}^{n} y_i^{(j-1)^2} \right)^{-2^{-(j-1)}}$$

In Formula 19, $\lambda$ indicates the normalization factor, y indicates the intermediate Softmax computation result, and i, j, k are constants.

Alternatively, the normalization factor may be expressed by the following formula.

[Formula 20]

$$\Lambda_0 \leftarrow 1, \Lambda_j \leftarrow \Lambda_{j-1} \cdot \left( \sum_{i=1}^{n} \left( y_i^{(j-1)} \right)^t \right)^{-\mu}$$

In Formula 20, $\Lambda_k$ indicates the normalization factor at step k among the multiple powering and normalizing operations, $y^{(j-1)}$ indicates the intermediate Softmax computation result at step j-1, and t indicates the integer parameter greater than or equal to 2.

If the Softmax function computation is performed according to the algorithm shown in FIG. 6, the processor 130 may reduce level consumption in the main thread during multiple repetition loops from 2 to 1.

Here, level may be a bootstrapping level. The bootstrapping level is a level that classifies a size of the plaintext space up to a state where bootstrapping needs to be performed. That is, if the computation is performed using the homomorphic ciphertext, a weight of an approximate message in the computation result ciphertext obtained for each computation may be changed.

If the homomorphic ciphertext is generated in the form given in Formula 9 described above, and q is smaller than M, M+e(mod q) yields a different value from M+e, thus making the decryption impossible. Therefore, a value of q needs to always be maintained to be greater than M. However, the value of q may be gradually decreased as the operation progresses. Therefore, an operation is needed to change the value of q to be maintained always to be greater than M. This operation is referred to as rebooting or bootstrapping. Alternatively, this operation may be referred to as a plaintext space extension operation. If bootstrapping level consumption is decreased, the number of times that bootstrapping needs to be performed may be decreased. Therefore, the computation may be performed more efficiently because resource consumption required for the computation is reduced. This effect may become even greater as the number of Softmax function computations that need to be calculated simultaneously increases as the multiple homomorphic ciphertexts are processed. For convenience of description, the algorithm in FIG. 6 may be referred to as version B of the Softmax function computation if the algorithm in FIG. 3 is referred to as version A of the Softmax function computation or a basic algorithm.

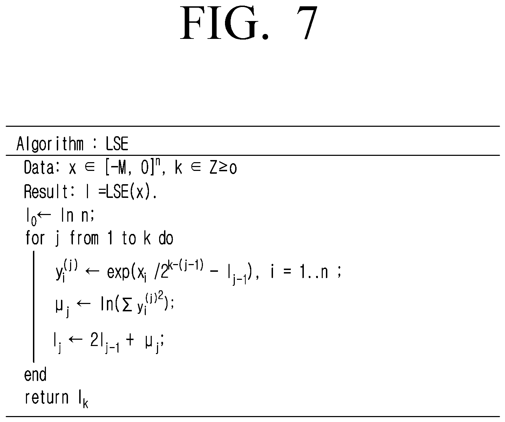

FIG. 7 is a diagram showing yet another example of an algorithm for performing the Softmax function computation by the electronic device according to at least one embodiment of the present disclosure.

The processor 130 may use the log-sum-exp (LSE) function in the Softmax algorithms shown in FIGS. 3 and 6. The LSE function may be expressed as follows.

[Formula 21]

$$\mathrm{LSE}(\mathbf{x}) = \ln\left(\exp(x_1) + \cdots + \exp(x_n)\right) \in \mathbb{R}$$

In Formula 21, ln indicates a log function using a natural constant e.

Meanwhile, the Softmax function may be expressed in the form of the LSE function as shown in Formula 22.

[Formula 22]

$$\mathrm{LSE}(\mathbf{x}/2^{k-1}) = 2\mathrm{LSE}(\mathbf{x}/2^k) + \mathrm{LSE}\left((x_i/2^{k-1} - 2\mathrm{LSE}(\mathbf{x}/2^k))_{1 \le i \le n}\right)$$

In Formula 22, a corresponding part that subtracts $2\mathrm{LSE}(x/2^k)$ corresponds to the normalizing operation, and a part of the previous formula corresponds to the squaring operation.

In the algorithm in FIG. 7, an initial value $l_0$ of l may start from $!\ell_0 \leftarrow 0$ if $!\ell = \mathrm{LSE}(x/2^{k-t})$ and $t \in \mathbb{Z}_{>0}$.

As described above, the electronic device according to the various embodiments of the present disclosure may efficiently perform the Softmax function computation or the LSE computation on the data. The embodiments described above may also be applied to a case where the data is the homomorphic ciphertext.

Meanwhile, if the electronic device according to the various embodiments described above repeatedly performs the squaring and normalizing operations multiple times, the electronic device may vary the degree of an approximation polynomial included in the homomorphic ciphertext based on its step.

For example, if the intermediate computation result obtained while repeating the squaring and normalizing operations multiple times is assumed to be $a^*y_i$, a is canceled out during the process of repeating the squaring and normalizing operations, as shown in the formula below.

[Formula 23]

$$\mathrm{Softmax}\left(\{x_j\}_{1 \le j \le n}\right)_i = \alpha \cdot y_i \implies \mathrm{Softmax}\left(\{2x_j\}_{1 \le j \le n}\right)_i = \frac{\alpha^2 \cdot y_i^2}{\alpha^2 \cdot \sum_{j=1}^n y_j^2} = \frac{y_i^2}{\sum_{j=1}^n y_j^2}$$
$$(\alpha \in [1-\delta, 1+\delta])$$

Therefore, $\dfrac{1}{\sum_{j=1}^n y_j^2}$ may be replaced with a coarse approximation in Formula 23.

The processor 130 may determine precision of approximation for the homomorphic ciphertext based on computation precision required for the computation result of the homomorphic ciphertext and perform the Softmax function computation on the homomorphic ciphertext having the determined precision of approximation during a final stage while performing the squaring and normalizing operations multiple times. As described above, the degree of the approximation polynomial used in an intermediate stage is not very important. Therefore, the processor 130 may determine the precision of approximation used in the intermediate stage and the precision of approximation used in the final stage differently among the squaring and normalizing operations that are repeatedly performed multiple times. As an example, the degree of the approximation polynomial may be determined to be low in the intermediate stage. This operation may be referred to as coarse normalization.

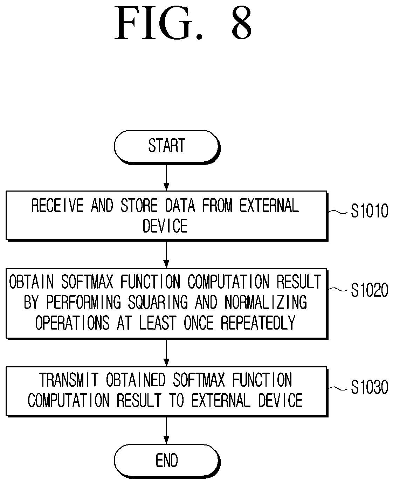

FIG. 8 is a flowchart for describing a method of an electronic device for processing data according to at least one embodiment of the present disclosure.

Referring to FIG. 8, the electronic device may receive and store the data from the external device (S1010). The data may be the general plaintext data or the homomorphic ciphertext homomorphically encrypted by the external device.

The electronic device may perform the Softmax function computation on the stored data. The electronic device may obtain the Softmax function computation result by performing the powering and normalizing operations at least once repeatedly on the range from the initial approximation range to the target approximation range during the process of performing the Softmax function computation (S1020). The powering and normalizing operations may be the squaring and normalizing operations.

The specific method for obtaining the Softmax function computation result is described in the description provided above, and its redundant description is therefore omitted.

The electronic device may transmit the obtained Softmax function computation result to the external device (S1030). As described above, the external device may decrypt the homomorphic ciphertext by using the secret key corresponding to the public key if the electronic device is provided with the homomorphic ciphertext obtained by the external device using the public key.

As shown in FIG. 8, the electronic device may pack and use the normalization factor to obtain the Softmax function computation result or may perform the computation based on the version B algorithm described above. Alternatively, the electronic device may perform the LSE computation instead of the Softmax function computation. Each embodiment is specifically described in the description provided above, and its redundant description is therefore omitted.

The method for processing data shown in FIG. 8 may be performed by the electronic device 100 described above with reference to FIG. 1, is not necessarily limited thereto, and may be performed by another electronic device having some configurations added, deleted, or modified.

In the process of performing the method for processing data in FIG. 8, the electronic device may perform the computation using the various formulas described above. The specific formula and computation method are described in detail in the description provided above, and their redundant descriptions are therefore omitted.

In addition, in the various embodiments according to the present disclosure, the electronic device is described as processing the data from the external device, is not necessarily limited thereto, and may perform the above-described Softmax function computation or the LSE computation on the data in the electronic device itself.

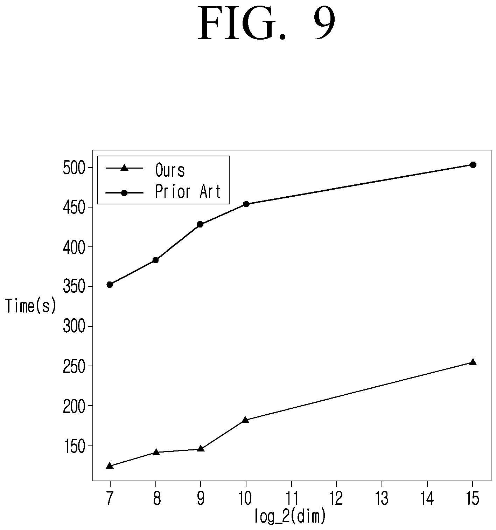

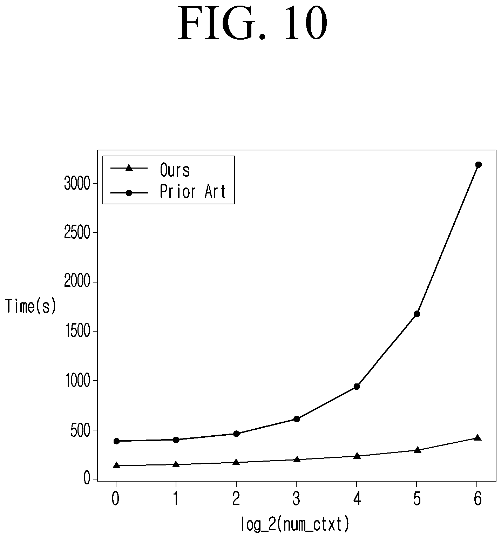

FIGS. 9 and 10 are graphs for describing effects of the method for processing data according to the present disclosure.

First, FIG. 9 shows the Softmax function computation result for the single homomorphic ciphertext. In FIG. 9, a horizontal axis log_2(dim) indicates a logarithmic value of dimension n, and a vertical axis indicates time required for the Softmax function computation. FIG. 9 shows results of measuring the time required for the Softmax function computation according to a prior art and the present disclosure across various dimensions in a graphical form. The graph in FIG. 9 is organized into the following table.

[Table 1]

| Dim | 128 | 256 | 512 | 1024 | 37268 |
|---|---|---|---|---|---|
| Present disclosure | 124 | 142 | 145 | 182 | 254 |
| Prior art | 353 | 383 | 428 | 453 | 503 |
| Speedup | 2.8 | 2.7 | 2.9 | 2.5 | 2 |

Referring to FIG. 9, the present disclosure may perform the Softmax function computation on the single homomorphic ciphertext approximately 3 times faster (428s - > 145s) than the prior art. FIG. 10 shows results of performing the Softmax function computation on the single ciphertext that includes the multiple normalization factors for the multiple homomorphic ciphertexts. In FIG. 10, a horizontal axis indicates a logarithmic value of the number of homomorphic ciphertexts, and a vertical axis indicates time required for the Softmax function computation.

The graph in FIG. 10 is organized into the following table.

[Table 2]

| Num_ctxt | 1 | 2 | 4 | 32 | 64 |
|---|---|---|---|---|---|
| Batch size | 128 | 256 | 512 | 4096 | 8192 |
| Present disclosure | 130 | 142 | 169 | 286 | 414 |
| Prior art | 387 | 395 | 455 | 1669 | 3183 |
| Speedup | 3.0 | 2.8 | 2.7 | 5.8 | 7.6 |

Referring to FIG. 10, the present disclosure may perform the Softmax function computation on the multiple homomorphic ciphertexts approximately 7 times faster (3184s -> 414s) than the prior art. As described above, according to the various embodiments of the present disclosure, the electronic device may perform the Softmax function computation or the LSE computation quickly and accurately. These embodiments may be used for the Softmax function computation or the LSE computation used in the AI model, especially if the homomorphic ciphertext is processed using the AI model. Accordingly, the computational burden may be greatly reduced.

Although the various embodiments are individually described hereinabove, each embodiment is not necessarily implemented alone, and may also be implemented partially or fully coupled with at least one other embodiment.

In addition, a program for performing the various data processing methods described above may be distributed or used while stored in a non-transitory readable recording medium. The non-transitory computer-readable medium may not be a medium that temporarily stores data, such as a register, a cache, or a memory, and may be a medium that semi-permanently stores data and readable by a machine. A specific example of the non-transitory computer-readable medium may include a compact disk (CD), a digital versatile disk (DVD), a hard disk, a blu-ray disk, a universal serial bus (USB), a memory card, a read only memory (ROM), or the like.

Although the embodiments are shown and described in the present disclosure as above, the present disclosure is not limited to the above-described specific embodiments, and may be variously modified by those skilled in the art to which the present disclosure pertains without departing from the gist of the present disclosure as claimed in the accompanying claims. These modifications should also be understood to fall within the scope and spirit of the present disclosure.

**Claims**

1. An electronic device comprising:

   an interface;
   a memory; and
   at least one processor,
   wherein the at least one processor is configured to
   based on the data being received from an external device through the interface, store data in the memory,
   obtain a Softmax function computation result by performing powering and normalizing operations at least once repeatedly on a range from an initial approximation range to a target approximation range during a Softmax function computation process for the data, and
   transmit the Softmax function computation result to the external device through the interface.

2. The electronic device as claimed in claim 1, wherein the data is a homomorphic ciphertext homomorphically encrypted by the external device.

3. The electronic device as claimed in claim 2, wherein a Softmax function is defined by

$$\mathrm{Softmax}(\{tx_j\}_{1\leq j\leq n})_i = \frac{y_i^t}{\sum_{j=1}^n y_j^t},$$

   and

   the powering and normalizing operations are mathematically expressed by

$$\mathrm{Softmax}(\{tx_j\}_{1\leq j\leq n})_i = \frac{y_i^t}{\sum_{j=1}^n y_j^t}$$

   , where, $y_i = u \cdot \mathrm{Softmax}(\{x_j\}_{1\leq j\leq n})_i$ for all $i$, $1 \leq i \leq n$ or $y_i = u \cdot \exp(\{x_j\}_{1\leq j\leq n})_i$ for all $i$, $1 \leq i \leq n$ in an initial step, and
   in the formula, x indicates the homomorphic ciphertext, i indicates an integer, n indicates an arbitrary positive integer, t indicates an integer greater than or equal to 2, and u indicates a nonzero real number.

4. The electronic device as claimed in claim 2, wherein the at least one processor is configured to

   obtain a single ciphertext including normalization factors by aggregating the respective normalization factors for normalization of multiple homomorphic ciphertexts if the multiple homomorphic ciphertexts are stored in the memory, and
   perform the powering and normalizing operations based on an intermediate Softmax computation result of each of the multiple homomorphic ciphertexts and the obtained ciphertext,
   wherein the normalization factor is

$$\lambda \leftarrow u \cdot \left( \sum_{i=1}^{n} y_i^{(j-1)t} \right)^{-k/t} ,$$

the powering and normalizing operations are computed as $y_i^{(j)} \leftarrow \left( \lambda \cdot \left( y_i^{(j-1)k} / u \right) \right)^{t/k}$ , and
in the formulas, t indicates an integer parameter greater than or equal to 2, k indicates an integer parameter greater than or equal to 1, u indicates a nonzero real number, $\lambda$ indicates the normalization factor, j indicates an integer, $y^{(j-1)}$ indicates a j-1th intermediate Softmax computation result, i indicates an integer, and $y^{(j)}$, which is a result of the formula, indicates a jth intermediate Softmax computation result.

5. The electronic device as claimed in claim 4, wherein the at least one processor is configured to perform the powering and normalizing operations by applying u=1, t=2, and k=2.

6. The electronic device as claimed in claim 2, wherein a Softmax function is defined by

$$\mathrm{Softmax}(\{x_i\}_{1 \le i \le n})_j = \frac{e^{x_j}}{\sum_{i=1}^{n} e^{x_i}} ,$$

the powering and normalizing operations are squaring and normalizing operations expressed by

$$\mathrm{Softmax}\left(\{2x_j\}_{1 \le j \le n}\right)_i = \frac{(e^{x_i})^2}{\sum_{j=1}^{n}(e^{x_j})^2} , \text{ or } \mathrm{Softmax}(2x)_i = \frac{y_i^2}{\sum_{j=1}^{n} y_j^2} \text{ for all i if}$$

y=Softmax(x) or y=(exp($x_i$))$_{1 \le i \le n}$,
in the formula, x indicates the homomorphic ciphertext, i and j are integers, and n is the arbitrary positive integer, and
each of the initial approximation range and the target approximation range is determined as a multiple of 2.

7. The electronic device as claimed in claim 2, wherein the at least one processor is configured to

determine precision of approximation for the normalizing operation based on computation precision required for the computation result of the homomorphic ciphertext and
perform a Softmax function computation on the homomorphic ciphertext having the determined precision of approximation during a final stage if the powering and normalizing operations are repeatedly performed multiple times, and
wherein the precision of approximation used in an intermediate stage and the precision of approximation used in the final stage are determined differently among the squaring and normalizing operations that are repeatedly performed multiple times.

8. The electronic device as claimed in claim 2,

wherein the at least one processor is configured to perform the powering and normalizing operations by using a normalization factor as in

$$\Lambda_0 \leftarrow 1, \Lambda_j \leftarrow \Lambda_{j-1} \cdot \left( \sum_{i=1}^{n} \left( y_i^{(j-1)} \right)^t \right)^{-t} ,$$

and
in the formula, $\Lambda_k$ indicates the normalization factor at step k among the multiple powering and normalizing operations, $y^{(j-1)}$ indicates an intermediate Softmax computation result at step j-1, and t indicates an integer parameter greater than or equal to 2.

9. A method of an electronic device for processing data, the method comprising:

receiving and storing data from an external device;
obtaining a Softmax function computation result by performing powering and normalizing operations at least once repeatedly on a range from an initial approximation range to a target approximation range during a Softmax function computation process for the data; and
transmitting the Softmax function computation result to the external device.

10. The method as claimed in claim 9,
wherein the data is a homomorphic ciphertext homomorphically encrypted by the external device.

11. The method as claimed in claim 10, wherein a Softmax function is defined by

$$\text{Softmax}(\{tx_j\}_{1 \leq j \leq n})_i = \frac{y_i^t}{\sum_{j=1}^{n} y_j^t}$$, and

the powering and normalizing operations are mathematically expressed by

$$\text{Softmax}(\{tx_j\}_{1 \leq j \leq n})_i = \frac{y_i^t}{\sum_{j=1}^{n} y_j^t},$$

where, $y_i = u \cdot \text{Softmax}(\{x_j\}_{1 \leq j \leq n})_i$ for all $i$, $1 \leq i \leq n$ or
and $y_i = u \cdot \exp(\{x_j\}_{1 \leq j \leq n})_i$ for all $i$, $1 \leq i \leq n$ in an initial step,
in the formula, x indicates the homomorphic ciphertext, i indicates an integer, n indicates an arbitrary positive integer, t indicates an integer greater than or equal to 2, and u indicates a nonzero real number.

12. The method as claimed in claim 10, wherein the obtaining of the computation result includes

obtaining a single ciphertext including normalization factors by aggregating the respective normalization factors for normalization of multiple homomorphic ciphertexts, if the multiple homomorphic ciphertexts are stored in a memory, and
performing the powering and normalizing operations based on an intermediate Softmax computation result of each of the multiple homomorphic ciphertexts and the obtained ciphertext,
wherein,

$$\lambda \leftarrow u \cdot \left( \sum_{i=1}^{n} y_i^{(j-1)^t} \right)^{-k/t}$$,

the normalization factor is

$$y_i^{(j)} \leftarrow \left( \lambda \cdot \left( y_i^{(j-1)^k} / u \right) \right)^{t/k}$$

the powering and normalizing operations are computed as , and
in the formulas, t indicates an integer parameter greater than or equal to 2, k indicates an integer parameter greater than or equal to 1, u indicates a nonzero real number, λ indicates the normalization factor, j indicates an integer, $y^{(j-1)}$ indicates a j-1th intermediate Softmax computation result, i indicates an integer, and $y^{(j)}$, which is a result of the formula, indicates a jth intermediate Softmax computation result.

13. The method as claimed in claim 12, wherein u=1, t=2, and k=2.

14. The method as claimed in claim 10, wherein a Softmax function is defined by

$$\text{Softmax}(\{x_i\}_{1 \leq i \leq n})_j = \frac{e^{x_j}}{\sum_{i=1}^{n} e^{x_i}}$$,

the powering and normalizing operations are squaring and normalizing operations expressed by

$$\mathrm{Softmax}\left(\{2x_j\}_{1\le j\le n}\right)_i = \frac{(e^{x_i})^2}{\sum_{j=1}^{n}(e^{x_j})^2}$$ , or $$\mathrm{Softmax}(2\mathbf{x})_i = \frac{y_i^2}{\sum_{j=1}^{n} y_j^2}$$ for all i if y=Softmax (x) or y=(exp($x_i$))$_{1\le i\le n}$,

in the formula, x indicates the homomorphic ciphertext, i and j are integers, and n is the arbitrary positive integer, and

each of the initial approximation range and the target approximation range is determined as a multiple of 2.

15. The method as claimed in claim 10, wherein in the obtaining of the computation result comprising:

determining precision of approximation for the normalizing operation is determined based on computation precision required for the computation result of the homomorphic ciphertext and perfoming a Softmax function computation on the homomorphic ciphertext having the determined precision of approximation during a final stage while the powering and normalizing operations are repeatedly performed multiple times, and

wherein, the precision of approximation used in an intermediate stage and the precision of approximation used in the final stage are determined differently among the squaring and normalizing operations that are repeatedly performed multiple times.

16. The method as claimed in claim 10, wherein in the obtaining of the computation result comprising, the powering and normalizing operations are performed by using a normalization factor as in

$$\Lambda_0 \leftarrow 1, \Lambda_j \leftarrow \Lambda_{j-1} \cdot \left(\sum_{i=1}^{n}\left(y_i^{(j-1)}\right)^t\right)^{-t^j}$$ , and

in the formula, $\Lambda_k$ indicates the normalization factor at step k among the multiple powering and normalizing operations, $y^{(j-1)}$ indicates an intermediate Softmax computation result at step j-1, and t indicates an integer parameter greater than or equal to 2.

# FIG. 1

ELECTRONIC
DEVICE ~100

NETWORK ~10

200-1 200-2 ..... 200-n

# FIG. 2

100

110
130
120

| INTERFACE | ↔ | PROCESSOR | ↔ | MEMORY |

# FIG. 3

Algorithm : SoftMax

Data: $x = \in [-M, 0]^n$ , $k \in Z \geq 0$

Result: $y = SoftMax(x)$.

$y_i^{(0)} \leftarrow exp(x_i/2^k)$, $i = 1..n$;

for $j$ from 1 to $k$ do

$$\lambda_j \leftarrow \left( \Sigma_{i=1}^{n} \ y_i^{(j-1)^2} \right)^{-1/2};$$

$$z_i \leftarrow \lambda_j \cdot y_i^{(j-1)} , i=1..n; \quad /* \ [Normalization] \ */$$

$$y_i^{(j)} \leftarrow z_i^2, i = 1..n; \quad\quad\quad /* \ [Squaring] \ */$$

end

return $(y^{(k)})$

# FIG. 4

# FIG. 5

| |
|---|
| Algorithm : Auxiliary thread |
| Input: $ct_1 = (x_1, 0, \ldots, x_2, 0, \ldots, x_n, 0, \ldots, 0)$ containing $x_i$ in slot $iN/n$ |
| Output: $ct_0 = (1/\lambda, 0, \ldots, 1/\lambda, 0, \ldots, 1/\lambda, 0, \ldots, 0)$, (nonzero values in slots $iN/n$), where $\lambda = (\sum_{i=1}^{n} x_i^2)^{-1/2}$. |
| 1 $ct_0 \leftarrow ct_1 \odot ct_1$; |
| 2 mask $\leftarrow (1, 0, \ldots, 0)$; |
| 3 for j from 0 to $[\log(n)] - 1$ do |
| 4 $ct_0 \leftarrow ct_0 + \text{Rot}(ct_0, -N/n \cdot 2^j)$ |
| 5 end |
| 6 $ct_0 \leftarrow \text{InvSqrt}(ct_0)$; |
| 7 $ct_0 \leftarrow ct_0 \odot$ mask; |
| 8 for j from 0 to $[\log(n)] - 1$ do |
| 9 $ct_0 \leftarrow ct_0 + \text{Rot}(ct_0, N/n \cdot 2^j)$ |
| 10 end |
| 11 return $ct_0$ |

# FIG. 6

Algorithm : Softmax (version B)

Input: $x \in [-M, 0]^n$, $k \in \mathbb{Z} > 0$

Output: $y = \text{Softmax}(x)$.

$\lambda \leftarrow 1$;

$Y_i^{(0)} \leftarrow \exp(x_i/2^k)$, $i = 1..n$;

for j from 1 to k do

$\quad \lambda_j \leftarrow \left( \Sigma_{i=1}^{n} \, y_i^{(j-1)^2} \right)^{-2^{-(j-1)}}$;

$\quad \lambda \leftarrow \lambda \cdot \lambda_j$;

$\quad z_i \leftarrow \lambda \cdot y_i^{(0)}$, $i = 1..n$;

$\quad y_i^{(j)} \leftarrow z_i^{2^j}$, $i = 1..n$;

end

return $(y^{(k)})$;

# FIG. 7

```
Algorithm : LSE
```

$\text{Data: } x \in [-M, 0]^n, k \in \mathbb{Z}_{\geq 0}$

$\text{Result: } l = LSE(x).$

$l_0 \leftarrow \ln n;$

$\text{for } j \text{ from } 1 \text{ to } k \text{ do}$

$\quad y_i^{(j)} \leftarrow \exp(x_i / 2^{k-(j-1)} - l_{j-1}), \; i = 1..n \;;$

$\quad \mu_j \leftarrow \ln(\Sigma \, y_i^{(j)2});$

$\quad l_j \leftarrow 2l_{j-1} + \mu_j;$

$\text{end}$

$\text{return } l_k$

# FIG. 8

```
                    ┌──────────┐
                    │  START   │
                    └────┬─────┘
                         │
                         ▼
    ┌──────────────────────────────────────┐
    │ RECEIVE AND STORE DATA FROM EXTERNAL  │ ～S1010
    │               DEVICE                  │
    └──────────────────┬───────────────────┘
                       │
                       ▼
    ┌──────────────────────────────────────┐
    │ OBTAIN SOFTMAX FUNCTION COMPUTATION   │
    │ RESULT BY PERFORMING SQUARING AND     │ ～S1020
    │ NORMALIZING OPERATIONS AT LEAST ONCE  │
    │              REPEATEDLY               │
    └──────────────────┬───────────────────┘
                       │
                       ▼
    ┌──────────────────────────────────────┐
    │  TRANSMIT OBTAINED SOFTMAX FUNCTION   │ ～S1030
    │ COMPUTATION RESULT TO EXTERNAL DEVICE │
    └──────────────────┬───────────────────┘
                       │
                       ▼
                 ┌──────────┐
                 │   END    │
                 └──────────┘
```

# FIG. 9

# FIG. 10

Europäisches Patentamt
European Patent Office
Office européen des brevets

## EUROPEAN SEARCH REPORT

**Application Number**

EP 25 15 5497

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | SEEWOO LEE ET AL: "HETAL: Efficient Privacy-preserving Transfer Learning with Homomorphic Encryption", ARXIV.ORG, CORNELL UNIVERSITY LIBRARY, 201 OLIN LIBRARY CORNELL UNIVERSITY ITHACA, NY 14853, 3 July 2023 (2023-07-03), XP091706504, | 1,2,9,10 | INV. H04L9/00 |
| A | * section 1 and 4.1 * | 3-8, 11-16 | |
| X,P | CHO WONHEE ET AL: "Fast and Accurate Homomorphic Softmax Evaluation", PROCEEDINGS OF THE 27TH ASIA AND SOUTH PACIFIC DESIGN AUTOMATION CONFERENCE, ACMPUB27, NEW YORK, NY, USA, 2 December 2024 (2024-12-02), pages 4391-4404, XP059784084, DOI: 10.1145/3658644.3670369 ISBN: 979-8-4007-0651-6 * sections 1, 3.3, 3.4 and 4.3 * | 1,3-9, 11-16 | |

**TECHNICAL FIELDS SEARCHED (IPC)**

H04L

The present search report has been drawn up for all claims

| Place of search | Date of completion of the search | Examiner |
|---|---|---|
| Munich | 27 June 2025 | Manet, Pascal |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)